# EUROPEAN PATENT SPECIFICATION

(11) **EP 2 604 875 B1**
(45) Date of publication and mention of the grant of the patent: **28.11.2018**
(21) Application number: 12786797.6
(22) Date of filing: 03.02.2012
(51) Int. Cl.: F16C 29/06, F16C 33/34, F16C 33/64, F16C 29/00

(54) **LINEAR MOTION GUIDE DEVICE**
FÜHRUNGSVORRICHTUNG FÜR LINEARBEWEGUNGEN
DISPOSITIF DE GUIDE DE MOUVEMENT LINÉAIRE

(30) Priority: 07.09.2011 JP 2011237475; 28.10.2011 JP 2012012937; 25.01.2012 JP 2011195484
(43) Date of publication of application: 19.06.2013
(73) Proprietor: NSK Ltd., Tokyo 141-8560 (JP)
(72) Inventor: YAMAGUCHI, Hiroki, Fujisawa-shi Kanagawa 251-8501 (JP)
(74) Representative: Klingseisen, Franz
(86) International application number: PCT/JP2012/000743
(87) International publication number: WO 2013/035212

(56) References cited:
- EP-A2- 1 471 273
- DE-U1- 8 903 980
- JP-A- H05 280 537
- JP-A- S61 274 118
- JP-A- 2000 161 354
- JP-A- 2002 227 840
- JP-A- 2006 077 796
- JP-A- 2008 106 873
- JP-A- 2008 106 873
- JP-A- 2010 112 395
- JP-U- H0 198 315
- JP-U- S63 162 128
- US-A- 4 799 804
- US-A- 5 005 988

## Description

### Technical Field

The present invention relates to a linear guide device which is provided with a slider which straddles a guide rail and which can slide along the guide rail via rolling elements. In particular, it relates to a linear guide device which can be suitably used for a guide shaft for a protective door at a platform of a train station, a feed mechanism of a general conveyor system, or other applications,

### Background Art

In the fields in which this type of linear guide device is used, industrial machinery and other equipment is being made increasingly compact. On the other hand, linear guide devices are being required to handle a broader range of load conditions and are being required to have higher load capacities. For this reason, in recent years, in not only machine tools, but also general conveyor systems, linear guide devices which use rolling elements made of rollers are being assembled in increasing examples. This is because if making the rolling elements rollers, the load capacity becomes much higher and rigidity becomes much higher compared with when making the rolling elements balls

However, if employing rollers as rolling elements, the linear guide device becomes more sensitive to mounting error compared with whenmaking the rolling elements balls. For this reason, in a conventional linear guide device including rollers, to avoid a drop in durability and other functions, the general practice has been to seek a precision of the mounting sur face higher than that in the case of making the rolling elements balls.

On the other hand, in general conveyor systems, due to cost restrictions etc., linear guide devices are used in states without the precision of the mounting surfaces for the linear guide devices or the precision of assembly being sufficiently secured. Due to this, sometimes noise is generated or early breakage etc. occurs. Therefore, for example, in Patent Document 1, the guide rail which forms part of the linear guide device is made a flexible structure part which is shaped to elastically deform (deformationabsorbing structure). According to this document, this flexible structure part may be used to absorb the mounting error of the linear guide device and make the linear guide device higher in load capacity.

### Citations List

### Patent Documents

Patent Document 1: JP 2004-44770 A
Patent Document 2: JP 61-274118 A
Patent Document 3: JP 2000-161354 A

### Summary of the Invention

### Problem to be Solved

However, in the art which is described in Patent Document 1, securing the strength of the guide rail with a flexible structure part is not considered. For this reason, if stress concentrates at the guide rail eoth the flexible structure part, at the time when a large load acts or at the time when a repeated load acts, the insufficient strength causes early breakage at a smaller load than the rated load of the rollers and it is worried that the effect of increasing the load capacity by using the rollers is unable to be sufficiently obtained.

Furthermore, since in the art which is described in Patent Document 1, since the long guide rail is a flexible structure part, the productivity in drawing etc. deteriorates, the manufacturing costs increase. Further, if the guide rail is a flexible structure part, a large number of mounting bolts becomes necessary. For this reason, the cost rises and the mountability of the guide rail falls. Further, it is difficult to attach the flexible structure part guide rail straight. For this reason, the mounting error is liable to become larger.

On the other hand, in the past, methods have been proposed of absorbing the difference in dimensions and assembly error between the slider body and the end caps. Patent Document 2 describes to absorb the error at the time of assembly by forming chamfered recessed parts at the boundary surface of the part which forms the return channels (slider body) with the parts which form the direction changing channels (side covers) and providing the side covers with peripheral projecting parts for side cover positioning use which engage with the chamfered recessed parts.

In this example, at the outside guide parts which guide the rolling elements at the outsides of the return channels and direction changing channels in the slider width direction, projections which have inclined surfaces (peripheral projecting parts) are formed at the boundary surfaces of the parts which form the direction changing channels (side covers) with the part which forms the return channels (slider body), and cut surfaces of inclined surface shapes (chamfered recessed parts) which receive the inclined surfaces of the projections are formed at the parts which form the return channels

Patent Document 3 describes to provide substantially cylindrically shaped projecting parts at boundary parts of parts which form direction changing channels (end caps) with the slider body (part forming return channels), the projecting parts being formed split to easily deform, and to provide substantially cylindrically shaped recessed parts into which the projecting parts fit at boundary parts of the part forming the return channels (slider body) with the parts which form the direction changing channels (end caps) to thereby absorb error which occurs in the positioning and dimensions at the time of assembly.

However, in both Patent Documents 2 and 3, it is only possible to absorb error or deviation to the extent of the amount of play of the rolling elements. Furthermore, specifications which have engaged parts by which end caps track deformation of the leg parts of the sliders are not disclosed either. For this reason, when the leg parts of the slider greatly deform, step differences are formed at the connecting parts of the two parts (end caps and slider body) and smooth circulation of the rolling elements is obstructed. Furthermore, neither document envisions large deformation of the leg parts of the slider (making rigidity of members of two leg parts of slider smaller than rigidity of contact parts of the rolling elements and rolling grooves).

### Solution to Problem

In DE 89 03 980 U1 and US 5,005,988 A, a linear guide device is disclosed, which is provided with a guide rail having a first rolling groove and a second rolling groove at its left and right outside surfaces, and in which a slider is provided having a first rolling groove and a second rolling groove which face the first and second rolling groove of the guide rail at inside surfaces of its left and right leg parts, respectively, and in which the outside surfaces of two leg parts are formed with first and second return channels for an endless recirculation of the rollers, wherein different pitches are used for the load side and the return side.

Therefore, the present invention was made focusing on this problem and has as its object the provision of a linear guide device which uses art different from the art of Patent Document 1 of making the guide rail a flexible structure part so as to configure the device inexpensively while realizing both a centering ability (absorption of mounting error) and high load capacity.

### Solution to Problem

This problem is solved by a linear guide device according to claim 1.

According to the linear guide device according to the first aspect of the present invention, the two leg parts of the slider are having flexible structure parts. That is, since this slider has a rigidity of the two leg parts of the slider which is smaller than the rigidity of the contact parts of the rolling elements and rolling grooves, elastic deformation of the low rigidity of two leg parts of the slider can absorb most of the mounting error and secure the centering ability. Further, since the two leg parts of the slider have flexible structure parts, compared with the case of making the long guide rail the flexible structure part, the increase in cost can be suppressed and the cost can be made inexpensive.

Further, a second aspect of the present invention comprises the linear guide device according to the first aspect of the present invention characterized in that the rolling grooves of the slider are provided with the surfaces at which the rolling grooves and the rolling elements contact inclined in advance in directions opposite to directions of inclination of the rolling grooves which occurs when the leg parts receive load and deform open and in that two ends of the rolling grooves of the slider and guide rail in the cross-sectional direction are provided with crowning. If employing such a configuration, the partial contact phenomenon (shoulder contact phenomenon) of the rolling elements is eased. Further, by providing the two ends of the rolling grooves of the guide rail and the slider in the cross-sectional direction with crowning, it is possible to prevent the formation of an edge load at the time when a high load acts, so this is preferable in improving the durability.

In the linear guide device according to one aspect of the present invention, the two leg parts of the slider become thin parts for obtaining a flexible structure part. Therefore, adopting a cross-sectional shape which pays attention to prevention of sudden breakage when a large load acts or breakage due to repeated fatigue is preferable in configuring a linear guide device without a problem in the strength of members.

Further, a third aspect not part of the present invention comprises the linear guide device according to the first or second aspect of the present invention characterized in that the member rigidity of the two leg parts of the slider is 1/12 to 1/1.5 of the contact part rigidity of the rolling elements and the rolling grooves. If employing such a configuration, as explained later, it is preferable to make the range of numerical values one aimed at in the practical usage range.

According to the present invention, the outside surfaces of the two leg parts of the slider form parts of return channels for endlessly circulating the rolling elements. By employing such a configuration, forming holes for the rolling element return channels provided in the past becomes unnecessary. For this reason, this lowers the costs.

Further, another aspect not part of the present invention comprises the linear guide device according to any one of the previous aspects wherein the guide rail is formed with the rolling grooves by a rolling process, the widths of the rolling grooves of the slider are widths including a difference of at least a fluctuation of widths of rolling grooves of the guide rail from a minimum value of widths of rolling grooves of the guide rail, and a clearance with loaded rolling elements which receive a load between the guide rail and slider is made zero.

If employing such a configuration, even if the maximum value of the (width of rolling grooves of guide rail) - (width of rolling grooves of slider) becomes larger, the two leg parts of the slider can be prevented from deforming and causing excessive pre-loading. For this reason, it is possible to make the clearance zero without changing the gauge size of the diameter of the rolling elements (for example, the diameter of the rollers) to match with the rolling grooves of the slider and the guide rail which are formed.. For this reason, it is not necessary to prepare a plurality of gauge sizes. Therefore, a linear guide device can be fabricated at much lower cost with good productivity. Furthermore, abnormal noise, operating noise, and vibration due to the clearance between the loaded rolling elements which are interposed between guide rail and the slider becoming larger can be prevented or suppressed.

Further, according to the present invention the rolling elements are rollers. Employing such a configuration increases the load capacity. In particular, according to the linear guide device according to the sixth aspect, it is possible to ease the partial contact phenomenon of the rollers at the rolling grooves and reduce the detrimental effects on the durability etc. as much as possible. Therefore, this is more preferable in realizing both the centering ability and high load capacity.

Further, another aspect not part of the present invention comprises the linear guide device wherein the rollers are assembled by a DB contact structure (structure in which intersecting point of axes of load action of strings of rollers rolling in two rolling channels of leg parts is present outside from rolling channels in width direction). If employing such a configuration, at both the load side and return channel side, it is possible to use single cover parts to form two recirculation channels. Therefore, compared with the DF contact, structure (structure in which intersecting point of axes of load action of strings of rollers rolling in two rolling channels of leg parts is present inside from rolling channels in width direction), the number of parts is reduced, so this becomes more advantageous in improving the productivity.

Furthermore, according to this configuration, when configuring parts of the return channels of the rolling elements by the cover members, the cover members can be attached after loading the rolling elements.. Due to this, the rolling elements can be loaded from the recirculation channel sides. For this reason, assembly becomes easy and production becomes advantageous in terms of productivity.

Furthermore, in addition to solving the above problem, it is more preferable to suppress the drop in performance of the linear guide device which is a concern by working the invention.

That is, the linear guide device according to another aspect has the following configurations (A) to (D) :
(A) A device which is provided with a guide rail, a slider, and a plurality of rolling elements, wherein the guide rail and the slider are arranged facing each other and have rolling surfaces which form rolling channels of rolling elements, the slider further has return channels of the rolling elements and direction changing channels which connect the return channels and the rolling channels, the rolling channels, return channels, and direction changing channels form recirculation channels of the rolling elements, and the recirculation channels have rolling elements circulating inside them, whereby one of the guide rail and the slider moves linearly relative to the other..
(B) The slider is provided with (1) a body which is comprised of leg parts which are arranged at the two sides of the guide rail in the width direction and a body part which connects the two leg parts, the leg parts having rolling surfaces formed inside them, (2) end caps which are fastened to the body at the two ends in the direction of linear movement and have outside guide surfaces which form parts of the direction changing channels, and (3) return guides which have inside guide surfaces which form parts of the direction changing channels..
(C) The body of the slider has a rigidity of the leg parts (member rigidity) smaller than the rigidity of the contact parts between the rolling elements and the rolling surfaces (contact part rigidity)
(D) The device has at least one of the following configurations (4) and (5).
   (4) At the outside guide parts which guide the rolling elements at the outsides of the return channels and direction changing channels in the slider width direction, projections with triangular cross-sections and with outsides in the slider width direction formed as inclined surfaces are formed at the peripheral edge parts of the outside guide surfaces at the boundary surfaces of the part which forms the return channels with the parts which form the direction changing channels (end caps or return guides) and cut surfaces of inclined surface shapes which receive the inclined surfaces of the projections are formed at the parts which form the direction changing channels.
   (5) At the inside guide parts which guide the rolling elements at the insides of the return channels and direction changing channels in the slider width direction, projections with triangular cross-sections and with insides in the slider width direction formed as inclined surfaces are formed at the peripheral edge parts of the inside guide surfaces at the boundary surfaces of the parts which form the direction changing channel with the part which forms the return channels, and cut surfaces of inclined surface shapes which receive the inclined surfaces of the projections are formed at the part which forms the return channels.

By the linear guide device according to the previous aspect having the above configuration (C), the two leg parts of the slider body have flexible structure parts Further, by having the two leg parts of the slider body which are low in rigidity elastically deform, most of the mounting error is absorbed, so the centering ability can be secured. Further, since the two leg parts of the slider body are flexible structure parts, the device can be produced more inexpensively compared with the case of making the long guide rail a flexible structure part.

Further, by having the above configuration (C), at the time of action of a high load, the leg parts of the slider body greatly deform. At this time, if this deformation cannot be tracked by the parts which form the direction changing channels (end caps and return guides), step differences are formed between these parts and the slider body whereby smooth circulation of the rolling elements is obstructed and deterioration of the operability, generation of noise, and early breakage are liable to occur. As opposed to this, by having the above configuration (D), the projections deform by flexing. Byhaving the cut surfaces receive the projections, the parts which form the direction changing channels can track deformation of the leg parts of the slider body which occurs at the time of action of a high load.

In the methods which are described in Patent Documents 2 and 3, the amounts of adsorption of error are small ones within the amounts of play of the rolling elements, so it is not possible to deal with cases of large deformation of the leg parts of the slider body

In the linear guide device of this invention, by making the dimensions of the leg parts of the slider body in the slider width direction smaller (by making the leg parts thinner), it is possible to make the rigidity of the leg parts smaller than the rigidity of the contact parts of the rolling elements and the rolling surfaces. In this case, for example, it is possible to employ the following configuration (E).
(E) The body is made of metal and has inside guide surfaces of return channels at the side surfaces of the leg parts, while the outside parts of the slider in the width direction, at least at the part separate from the body, are made of a plastic and are formed by return channel forming members which have outside guide surfaces of the return channels

Due to this, forming holes for forming the return channels becomes unnecessary, so the productivity is improved and production becomes advantageous cost wise as well.. Further, the projections become easier to deform by flexing by being made of plastic rather than by being made of metal, so in the case of the above configuration (4), it is preferable to employ the configuration (E) and form the projections integrally with the return channel forming members by plastic.

### Advantageous Effects of Invention

According to the present invention, it is possible to provide a linear guide device which uses art different from the art of Patent Document 1 of making the guide rail a flexible structure part so as to configure the device inexpensively while achieving both a centering ability (absorption of mounting error) and high load capacity.

### Brief Description of the Drawings

FIG. 1 is a perspective view which explains one embodiment of a linear guide device according to one aspect not part of the present invention (DB contact structure), which figure shows part in a cutaway state. Note that, in the figure, the arrow marks M indicate the "slide movement direction" of the slider.
FIG. 2 is a cross-sectional view along Z-Z of FIG. 1.
FIG. 3 is a view which explains a relationship of dimensions (thicknesses) of parts of the linear guide device of a first embodiment and operation of the same, which figure shows a lateral cross-sectional shape of the slider body of FIG. 2. Note that, in the figure, the arrows with the letter H attached show the "groove width of the rolling groove of the slider (slider body)".

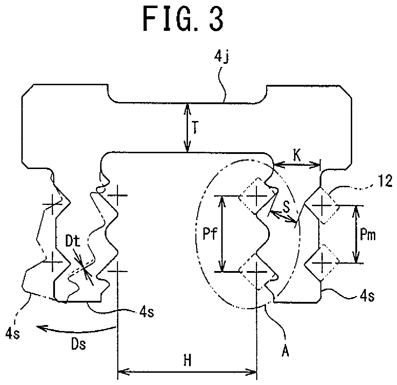

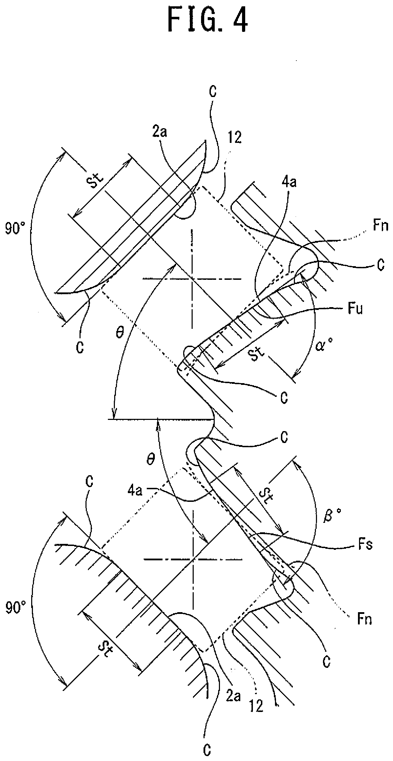

FIG. 4 is a view which explains one embodiment of a rolling groove of a slider of the first embodiment, which figure shows an enlarged view of a part A of FIG. 3. Note that, in the figure, the letter C indicates a "crowning part", the letters St indicate a "straight part", the symbol θ indicates a "contact angle direction of the rolling elements (in this example, θ=45°)", the letters Fn indicate a "position of a rolling groove when inclination is not corrected", the letters Fs indicate a "position of the lower rolling groove at the slider side when inclination is corrected", and the letters Fu indicate a "position of the upper rolling groove at the slider side when inclination is corrected".
FIG. 5 is a graph which shows the relationships of the ratio of the member deformation amount to the contact part deformation amount with the inclined angle of the rolling grooves of the slider and maximum surface pressure of the contact parts at the time of a 20% C₅₀ₖₘ load.
FIG. 6 is a graph which shows the relationship between the ratio of the member deformation amount to the contact part deformation amount and the allowable value of mounting error (parallelness of two axes).
FIG. 7 is a view which explains a modification of the embodiment of a linear guide device according to the aspect of the present invention (another example of DB contact structure).
FIG. 8 is a view which explains another embodiment of a linear guide device according to the aspect of the present invention (DF contact structure) and which corresponds to the above FIG. 2.
FIG. 9 is a partial perspective view which shows a linear guide device of a second embodiment according to the invention.
FIG.. 10 is a partial cross-sectional view which shows a state of the linear guide device of the second embodiment from which an end cap is detached.
FIG 11 is a view which shows dimensions of the slider body and explains its action..
FIG. 12 is a view which shows an end cap of the linear guide device of the second embodiment.,
FIG. 13 is a view which shows a boundary part between a member which forms a return channel and a member which forms a direction changing channel of the linear guide device of the second embodiment,
FIG. 14 is a view which explains the action of the linear guide device of the second embodiment.
FIG. 15 is a view which shows a boundary part between a member which forms a return channel and a member which forms a direction changing channel of a linear guide device of a third embodiment not part of the invention.
FIG. 16 is a partial cutaway perspective view which shows a linear guide device of a fourth embodiment not part of the invention.
FIG.. 17 is a partial cross-sectional front view which shows a state of the linear guide device of the fourth embodiment from which an end cap is detached.
FIG. 18 is a view which shows an end cap of the linear guide device of the fourth embodiment.
FIG 19 is a view which shows a boundary part between a member which forms a return channel and a member which forms a direction changing channel of the linear guide device of the fourth embodiment. Description of Embodiments

Below, embodiments of the linear guide device will be explained while referring to the drawings.

### [First Embodiment]

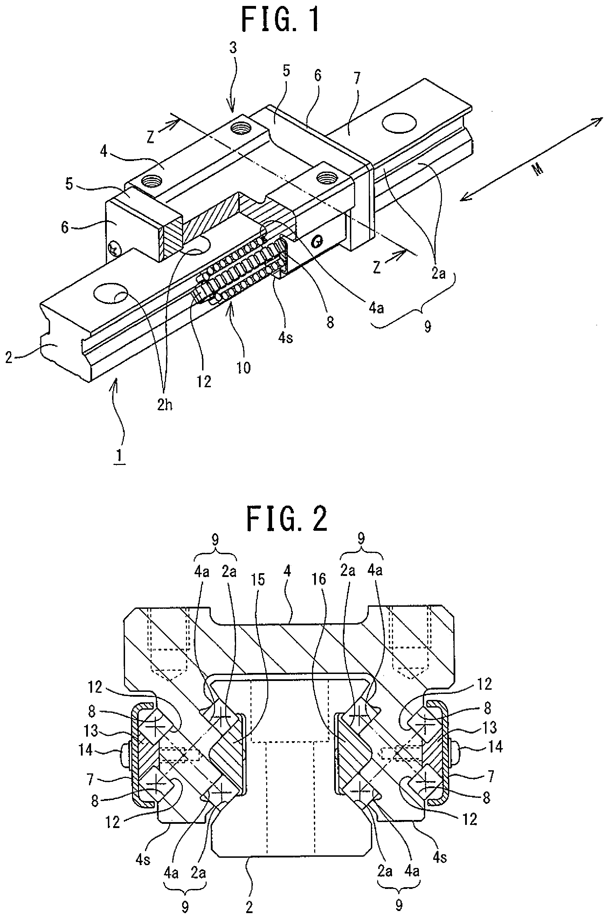

As shown in FIG. 1, the linear guide device 1 of the first embodiment is provided with a guide rail 2 with a substantially I-shaped horizontal cross-section and a slider 3 which straddles this guide rail 2 in a slidable manner.

This guide rail 2 is fabricated by a rolling process and is formed along the long direction of the guide rail 2 with two rolling grooves 2a at the left and right side surfaces.. The top surface of the guide rail 2 is formed along its long direction with a plurality of mounting holes 2h separated at predetermined intervals.

The slider 3 has a slider body 4 and a pair of end caps 5 which are provided at the two end faces of this slider body 4 (two sides in sliding direction). The slider 3 has a horizontal cross-section of a substantially upside down U-shape with the left and right of the substantially upside down U-shape forming leg parts 4s. Note that, the two end faces of the end caps 5 have side seals 6 attached to them to prevent dust and other foreign matter from entering inside of the slider 3.

Further, the slider body 4 has two rolling grooves 4a at the inside surfaces of the two leg parts 4s which face two rolling grooves 2a at the guide rail 2 sides.. Further, these rolling grooves 2a, 4a are used to form the loaded rolling channels 9.

Here, the outside surfaces of the two leg parts 4s, as shown in FIG 2, are formed with parts of rolling element return channels 8 which are formed along the long direction of the guide rail 2 (which is also sliding direction of slider 3). Further, rolling element guide deflectors 13 which form parts of the rolling element return channels 8 are attached between the end caps 5. To enabling rolling elements to be loaded from the rolling element return channel 8 sides, the outsides of the rolling element guide deflectors 13 may have recirculation channel covers 7 later attached by recirculation channel cover fastening screws 14. Note that, in the example of this embodiment, the end faces of the rollers 12 are only chamfered and are not provided with crowning, while the two end parts of the rolling grooves 4a of the slider 3 and the rolling grooves 2a of the guide rail 2 are provided with crowning (see FIG. 4). Note that, to increase the centering ability while suppressing the generation of an edge load at the contact parts, in the example of this embodiment, crownings of the rolling grooves 2a, 4a are formed at the two sides of the straight parts at about 60% of the length in the axial direction of the rollers 12 by a magnitude of R100 (about 30 times the diameter of the rollers). Due to this, this becomes a shape wherein even if a load of 1/2 of the static rated load acts, no edge load is generated.

Further, returning to FIG. 1, the pair of end caps 5 have U-shaped direction changing channels (not shown). The two ends of the direction changing channels are communicated with the rolling element return channels 8 and loaded rolling channels 9. Further, these rolling element return channels 8, loaded rolling channels 9, and direction changing channels form substantially oval ring shaped endless recirculation channels 10. The endless recirculation channels 10 have roller s 12 loaded into them as pluralities of rolling elements..

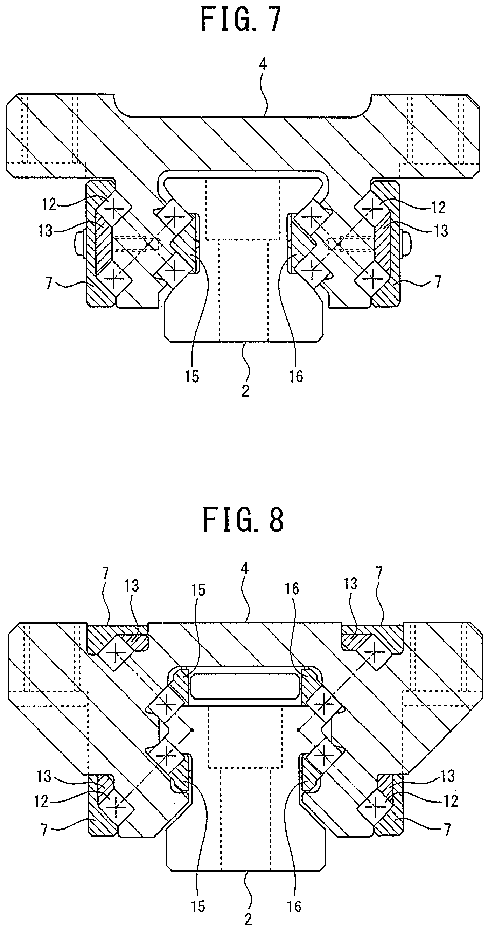

Here, in the example of this embodiment, as shown in FIG. 2, the rollers 12 are loaded by a DB contact structure (structure in which intersecting point of axes of load action of strings of rollers rolling in two rolling channels 9 of leg parts 4s is present outside from the rolling channels in the width direction). For this reason, as shown in FIG. 2, at the load side, single holders 15, 16 can form two endless recirculation channels 10. Further, regarding the recirculation channel covers 7 and rolling element guide deflectors 13 which form parts of the rolling element return channels 8 as well, single recirculation channel covers 7 (and rolling element guide deflectors 13) can be used to form parts of two rolling element return channels 8. As opposed to this, as illustrated in FIG. 8, when employing configurations where the rollers 12 are loaded by a DF contact structure (structure in which intersecting point of axes of load action of strings of rollers rolling in two rolling channel of leg parts is present inside from the rolling channels in the width direction, the respective endless recirculation channels 10 have to be provided with holders 15, 16 and recirculation channel covers 7.

Due to this, this linear guide device 1 is designed so that the loaded plurality of rollers 12 roll through the insides of the endless recirculation channels 10 along with relative movement of the slider 3 with respect to the guide rail 2, change direction at the direction changing channels inside one of the end caps 5, then are introduced into rolling element return channels 8 and return from the other side direction changing channels again to the loaded rolling channels 9. While thus recirculating, the slider 3 slides smoothly along the long direction of the guide rail 2 through the plurality of rollers 12.

Next, the two leg parts 4s of the slider 3 of the linear guide device 1 will be explained in detail.

As shown in FIG. 2 by the horizontal cross-sectional shape, the two leg parts 4s of the slider 3 are made thinner by cutting away the outside surfaces so that the rigidity of the members of the two leg parts 4s becomes smaller than the rigidity of the contact parts of the rollers 12 and the rolling grooves 4a.

In the present embodiment, in the horizontal cross-sectional shape of the slider body 4j which is shown in FIG. 3, the elastic deformation amount Ds (shown in figure by one-dot chain line image) of the left and right leg parts 4s as a whole at the time of assembly of the slider 3 (slider body 4) is made about two times the elastic deformation amount Dt (shown in figure by broken line image) at the contact parts of the rolling elements constituted by the rollers 12 and the rolling grooves 4a (from results based on FEM analysis).. At this time, the thinnest parts S of the leg parts 4s of the slider 3 are kept from becoming extremely small compared with the base end thickness K of the leg parts 4s by giving the thinnest parts S a thickness of at least 1/2 of the base end thickness K of the leg parts 4s. Note that, in the figure, the letter T shows the thickness of the top surface part of the slider body 4.

Here, the two leg parts 4s which form the thin parts of the slider 3 preferably have cross-sectional, shapes, which is considered to prevent sudden breakage when a large load acts or damage due to repeated fatigue That is, the thinner the leg parts 4s of the slider 3, the more the slider 3 falls in member rigidity and the more the absorption of mounting error or other centering ability increases. However, on the other hand, the stress at the time of application of load increases and the members fall in strength, If this drop in strength is remarkable, despite using rollers as rolling elements and increasing the load capacity at the rolling element, parts, it is no longer possible to make use of the high load capacity due to the restrictions in strength at the leg parts 4s. Therefore, in the present embodiment, the base end thickness K of the leg parts 4s of the slider 3 is about two times the diameter of the rollers 12 used as the rolling elements. Due to this, both a centering ability and high load capacity can be realized.

Further, in the present embodiment, as shown in FIG. 3, the load side pitch Pf and the return side pitch Pm of the rolling elements 12 are unequal so that the load side pitch Pf>return side pitch Pm. Due to this, the thickness of the thinnest parts S of the leg parts 4s of the slider 3 is made as large as possible so as to ease concentration of stress and secure the strength of members of the slider 3. Note that, in the present embodiment, the load side pitch Pf and the return side pitch Pm are unequal in the left-right direction of the horizontal cross-section shown in FIG.. 3 (load side pitch Pf>return side pitch Pm), but in the up-down direction of the cross-section, the positions of the rollers at the load side and return side are symmetric in the up-down direction

Furthermore, in the present embodiment, as shown in FIG. 4 by the enlarged view of principal parts, the rolling grooves 4a of the slider 3 are provided so that the sur faces at which the rolling grooves 4a and the rollers 12 contact each other are inclined in advance in directions opposite to the directions of inclination of the rolling grooves 4a when the leg parts 4s receive load and deform open. In more detail, the rolling grooves 2a at the sides of the guide rail 2 perpendicularly intersect the contact angle direction with the rolling elements constituted by the rollers 12 (in the present embodiment, 45° for both the top and bottom rolling grooves in the figure), but the rolling grooves 4a at the sides of the slider 3 are provided inclined in advance in directions opposite to the directions of inclination of open. Furthermore, the rolling grooves 4a at the sides of the slider 3 are inclined with respect to the contact angle direction of the rollers 12 at the top rolling groove 4a by an angle α° smaller than 90° and, further, at the bottom rolling groove 4a by an angle β° larger than 90°.

In the example of this embodiment, when a load of 20% of the dynamic rated load acts, partial contact phenomenon of the rollers 12 is eased most at the top rolling groove 4a when the angle α° is 89.2° and, further, at the bottom rolling groove 4a when the angle β° is 90.2°. The upper limit of the load at the time of operation in the market is generally 20% of the dynamic rated load, so in the practical usage range, this is a shape most advantageous for durability (small partial contact phenomenon of rollers 12 = small drop in service life) ..

Here, the present linear guide device is characterized by the member rigidity of the two leg parts of the slider body is smaller than the rigidity of the contact parts of the rolling elements and rolling grooves. However, if the member rigidity of the two leg parts of the slider body is too small, the extent of opening deformation of the two leg parts of the slider body with respect to application of load becomes too large., For this reason, even if providing the rolling grooves in advance with inclination in directions opposite to the directions of inclination which occurs when the leg parts deform open, the applied load cannot be completely absorbed and a remarkable deviated load is formed at the rollers. (Note that, individual setting of inclined angles of the rolling grooves to match with the conditions of use of the user remarkably obstructs the productivity, so there is a practical problem). On the other hand, if the member rigidity of the two leg parts of the slider body is not sufficiently smaller than the rigidity of the contact parts of the rolling elements and rolling grooves, the centering ability becomes insufficient.

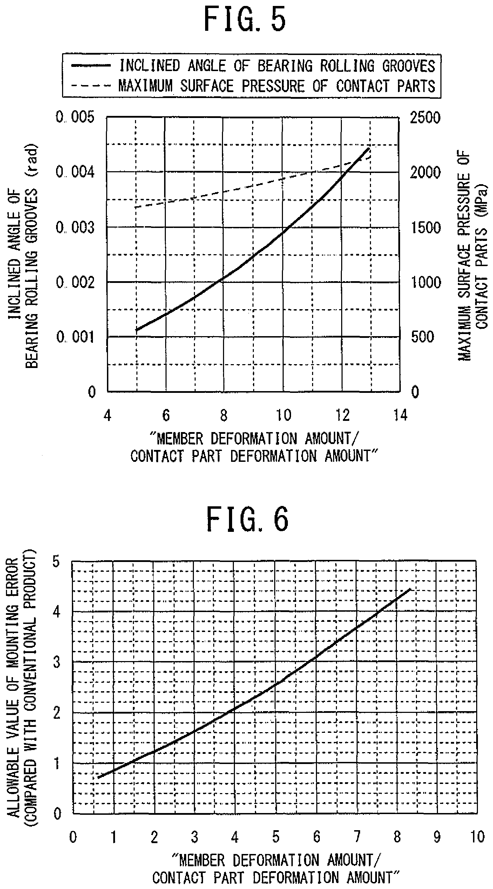

FIG. 5 shows the relationship between the ratio of the amount of member deformation of the two leg parts of the slider body with respect to the amount of deformation of the contact parts of the rolling elements and rolling grooves when the a load of 20% of the dynamic rated load acts (in general, a load of the upper limit in practice at the time of operation) with the inclined angle of the rolling grooves of the slider body and the maximum surface pressure of the contact parts of the rolling elements and rolling grooves.

As shown in this figure, as the member rigidity of the two leg parts of the slider body becomes smaller than the contact part rigidity of the rolling elements and rolling grooves, the "member deformation amount/contact part deformation amount" becomes larger in value. On the other hand, the larger this value, the more easily the members of the two leg parts of the slider body deform even when receiving the same applied load (that is, the larger the inclination of the rolling grooves of the slider body). For this reason, a deviated load acts on the rollers and the surface pressure of the contact parts of the rolling elements and the rolling grooves become larger.

Here, to ease the deviated load which is caused at the rollers, provision of an inclination at the rolling grooves in advance (=inclination correction) in directions opposite to the directions of inclination which occurs at the time the leg parts deform open is effective.. However, when the amount of change of the inclined angle of the rolling grooves of the slider body in the practical usage range (0 to 20% of dynamic rated load) is large, it is not possible to ease the occurrence of deviated load with one type of inclination correction. For this reason, it becomes necessary to provide a plurality of types of inclination corrections to match with the conditions of use of the users. This has a detrimental effect on the productivity and costs,

Therefore, in the practical usage range, the maximum surface pressure of the contact parts never greatly exceeds the upper limit target level (in general, 2000 MPa). As the "member deformation amount/contact part deformation amount" which gives an inclined angle of the rolling grooves of the slider body of 0.004 rad or less enabling use of one type of inclination correction, from the same figure, "12 or less" is obtained.

FIG. 6 shows the relationship between the ratio of the amount of member deformation of the two leg parts of the slider body with respect to the amount of contact part deformation of the rolling elements and rolling grooves and the magnitude of the allowable value of mounting error of parallelism of two axes with respect to conventional products (case making rolling elements balls and where deformation of member is small).. From the figure, as the value of the "member deformation amount/contact part deformation amount" becomes smaller, the difference from the conventional products in the allowable value of mounting error disappears (ratio becomes close to "1") and, as the "member deformation amount/contact part deformation amount" where the allowable value of mounting error becomes larger than the conventional products, "1.5 or more" is obtained.

Due to the above, the suitable value of the "member deformation amount/contact part deformation amount" can be the to be 1.5 to 12 in range, Here, "rigidity = load/displacement amount", so in the present invention, the range of numerical values aimed at when making the rigidity of the two leg parts of the slider body smaller than the contact part rigidity of the rolling elements and rolling grooves becomes 1/12 to 1/1.5.

Next, the action and effect of the linear guide device 1 of the first embodiment will be explained.

According to the linear guide device 1, as shown in FIG. 3 showing the horizontal cross-sectional shape of the slider 3 (slider body 4), the leg parts 4s of the slider 3 are flexible structure parts which are made thin so that they can deform more than the contact parts of the rollers 12 and the rolling grooves 4a and absorb error (in this example, the amount of elastic deformation of the leg parts 4s of the slider 3 becoming about two times the amount of elastic deformation at the parts of the rolling grooves 4a (according to results of FEM analysis)), so even when precision of the mounting surface or the assembly surface cannot be sufficiently secured, the assembly error can be absorbed.

Further, according to the linear guide device 1, the thinnest parts S of the leg parts 4s of the slider 3 are prevented from becoming extremely small compared with the base end thickness K of the leg parts 4s by giving the thinnest parts S a thickness of 1/2 or more of the base end thickness K of the leg parts 4s, so stress can be prevented from extremely concentrating at the thinnest parts S of the leg parts 4s of the slider 3. For this reason, the leg parts 4s of the slider 3 as a whole can receive most of the load. Due to this, it is possible to absorb the mounting error by elastic deformation of the leg parts 4s of the slider 3 having low rigidity flexible structure.. For this reason, even at the time of action of a large load, it is possible to receive the load without causing extreme concentration of stress at the thinnest parts S of the leg parts 4s of the slider 3. Therefore, this is advantageous against sudden breakage or breakage due to repeated fatigue.

In this way, according to the linear guide device 1, since the two leg parts 4s of the slider 3 are flexible structure parts, even if being an inexpensive configuration, it is possible to realize both a centering ability (absorption of mounting error) and high load capacity

Here, as the thickness of the leg parts 4s of the slider 3 is decreased, the members of the slider 3 fall in rigidity, so the absorption of mounting error and other centering ability increases, but the stress at the time of the applied load increases and the strength of the members falls.. If this drop in strength is remarkable, despite using rolling elements constituted by rollers 12 to increase the load capacity, it is no longer possible to make use of the high load capacity due to restrictions in the strength of the leg parts 4s. Therefore, in the present embodiment, the thickness K of the base parts of the leg parts 4s of the slider 3 is made about 2 times the diameter of the rollers 12 so as to realize a centering ability and high load capacity.

Further, in the linear guide device 1, the outside surfaces of the thinned two leg parts 4s of the slider 3 are formed with parts of the rolling element return channels 8. Due to this, formation of return holes in the slider 3 which used to be provided becomes unnecessary, so the cost becomes lower.

On the other hand, in the present embodiment, rollers are used for the rolling elements 12. For this reason, as shown in FIG. 3, the leg parts 4s of the slider 3 become uneven in thickness and it is observed that stress is tending to concentrate at the edge of the thinnest parts S. However, in the present embodiment, since the load side pitch Pf and the return side pitch Pm of the rolling elements 12 are unequal so that the load side pitch Pf>return side pitch Pm, it is possible to increase the thickness of the thinnest parts S of the leg parts 4s of the slider 3 as much as possible to ease the concentration of stress. For this reason, it is possible to secure the member strength of the slider 3.

Here, in the present embodiment, in the left-right directions in the horizontal cross-section, the load side pitch Pf and the return side pitch Pm are made unequal so that the load side pitch Pf>return side pitch Pm, but in the up-down direction of the horizontal cross-section, the positions of the rollers at the load side and return side are made symmetric in the up-down direction. Due to this, according to the present embodiment, it is possible to use the end caps 5 which are attached to the two ends of the slider 3 (or return guides) in common. Further, the lengths of the top and bottom endless recirculation channels 10 become the same, so this is advantageous for productivity. Further, design becomes easy.

Further, in the linear guide device 1, as shown in FIG. 4 which shows enlarged principal parts of the horizontal cross-sectional shape of the slider 3 (slider body 4), the rolling grooves 4a of the slider 3 are provided so that the surfaces where the rolling grooves 4a and the rollers 12 contact are inclined in advance in directions opposite to the directions of inclination of the rolling grooves 4a which occurs when the leg parts 4s receive load and deform open (inclination correction by rolling grooves 4a). Therefore, this is preferable in easing the partial contact phenomen on of the rollers 12 and improving the durability..

Furthermore, in the linear guide device 1, the recirculation channel covers 7 which form parts of the rolling element return channels 8 (outer circumference side) can be attached later, so if making the slider 3 a horizontally laid one (wall mounting posture), it is possible to hold the rollers 12 of the rolling elements on the rolling element return channels 8 formed at the slider 3 sides under gravity. For this reason, it is possible to load the rolling elements 12 from the rolling element return channel 8 sides. Therefore, assembly becomes easy. This is preferable for improvement of the productivity.

Further, in the present embodiment, the rollers 12 are loaded by a DB contact structure, so at both the load side and return side, single holders 15, 16 can be used to form two endless recirculation channels 10. For this reason, it is possible to reduce the number of parts compared with the case of using a DF contact structure (structure in which intersecting point of axes of load action of strings of rollers rolling in two endless recirculation channels 10 of leg parts 4s is present inside from the loaded rolling channels 9 in the width direction) . Therefore, this becomes more advantageous in improving the productivity.

In particular, in the present embodiment, the above-mentioned inclination correction by the rolling grooves 4a of the slider 3 can be used to ease the partial contact phenomenon of the rollers 12 to suppress the higher surface pressure and, furthermore, the crownings provided at the two ends of the rolling grooves 2a, 4a in the cross-sectional direction can be used to prevent the occurrence of edge load. For this reason, it is possible to remarkably reduce the detrimental effect on the durability etc Due to this, even if the mounting error is large and the device is used under conditions subjected to a high load, no large drop in durability is invited. Therefore, according to the linear guide device 1, this is particularly preferred for realizing a centering ability (absorption of mounting error) andhighloadcapacity..

Further, the rolling grooves 2a of the guide rail 2 of the present embodiment are made by a rolling process which enables suppression of the production costs, but fluctuations in the width of the rolling grooves 2a due to the rolling process can also be absorbed by elastic deformation of the low rigidity leg parts 4s of the slider 3, so it is possible to make the clearance with the loaded rolling elements 12 which are interposed between the guide rail 2 and the slider 3 zero when the groove widths of the guide rail 2 are the minimum values. Even if the groove widths of the guide rail 2 fluctuate to the maximum values, it is possible to prevent the leg parts 4s of the slider 3 from elastically deforming so excessive and causing pre-loading.

At this time, by adding to the width of the rolling grooves 2a of the guide rail 2 (minimum value) a difference of the amount of fluctuation of the groove widths or more to set the width of the rolling grooves 4a of the slider 3, it is possible to make the clearance zero without changing the gauge size of the diameter of the rollers forming the rolling elements. For this reason, there is no need to prepare a plurality of gauge sizes Therefore, it is possible to fabricate the linear guide device 1 much more inexpensively with a good productivity Furthermore, it is possible to prevent or suppress the occurrence of abnormal noise or operating noise and vibration due to a large clearance with loaded rolling elements 12 which are interposed between the guide rail 2 and the slider 3.

As explained above, according to the linear guide device 1, it is possible to make the configuration more inexpensive while achieving both a centering ability (absorption of mounting error) and high load capacity. Note that, the linear guide device according to the present invention is not limited to this embodiment.

For example, in this embodiment, the explanation was given with reference to an example where the rolling elements 12 were rollers, but, not according to the invention, the rolling elements 12 may alsobe configured as balls. However, if the rolling elements are rollers, this is preferable in making the load capacity larger. In particular, according to this embodiment, it is possible to ease the partial contact phenomenon of the rollers in the rolling grooves so as to reduce the detrimental effect on the durability etc as much as possible. For this reason, this is preferable for achieving both the centering ability and high load capacity.

Further, for example, in this embodiment, the explanation was given of an example where when making the two leg parts 4s of the slider 3 thinner, the outside surfaces of the two leg parts 4s of the slider 3 are formed with parts of the rolling element return channels 8 for endless circulation of the rolling elements 12, but the invention is not limited to this. For example, the device may also be a cross-sectional shape different from FIG. 1. It is important to secure the member strength of the leg parts 4s of the slider 3 while making the rigidity of the leg parts 4s of the slider 3 small.. However, for eliminating the need for formation of return holes in the slider 3 which were conventionally provided and thereby lower the cost, it is preferable, like in the above embodiment, to form the outside surfaces of the two leg parts 4s of the slider 3 with parts of the rolling element return channels 8 for endless circulation of the rolling elements 12.

Further, for example in this embodiment, the explanation was given of an example where in the left-right direction of the horizontal cross-section, the load side pitch Pf and the return side pitch Pm were unequal so that the load side pitch Pf>return side pitch Pm, but for example, as with the DB contact structure which is shown in FIG. 7, it is possible to make the load side pitch Pf<return side pitch Pm. However, in making the thickness of the thinnest parts of the leg parts 4s of the slider 3 as large as possible to ease the concentration of stress and secure the member strength of the slider 3, in the left-right direction in the horizontal cross-section, the load side pitch Pf and the return side pitch Pm are preferably set so that the load side pitch Pf>return side pitch Pm.

Further, for example, in this embodiment, the example where rollers were loaded by a DB contact structure was explained, but as illustrated in FIG. 8, a DF contact structure (structure in which intersecting point of axes of load action of strings of rollers rolling in two rolling channels of leg parts is present inside from the rolling channels in the width direction) may also be used. However, the number of parts are reduced, so it is preferable to employ a DB contact structure to improve the productivity.

### [Second Embodiment]

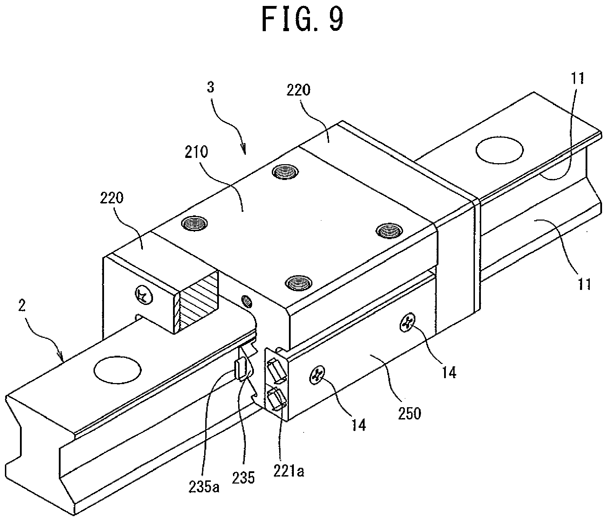

FIGS. 9 to 14 will be used to explain a linear guide device of a second embodiment.

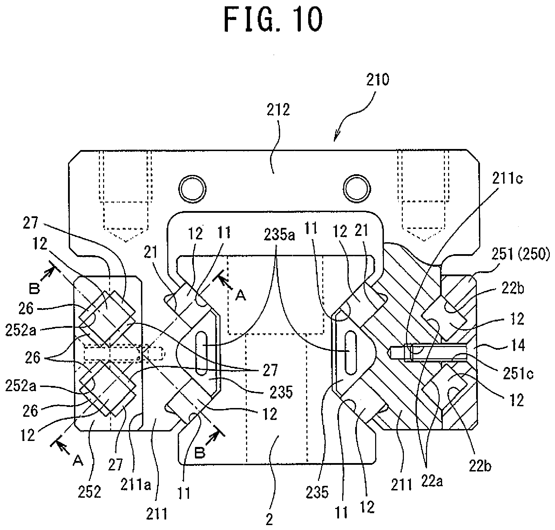

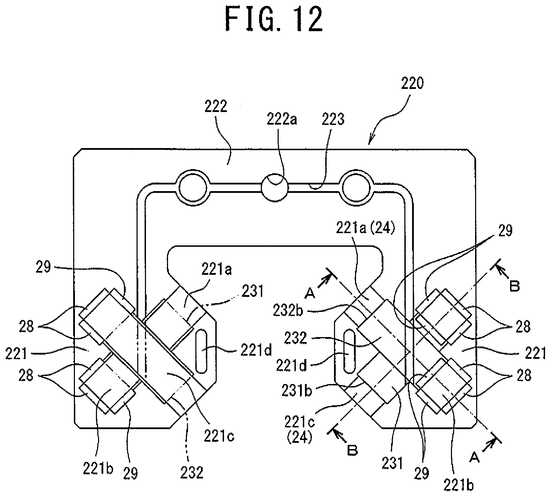

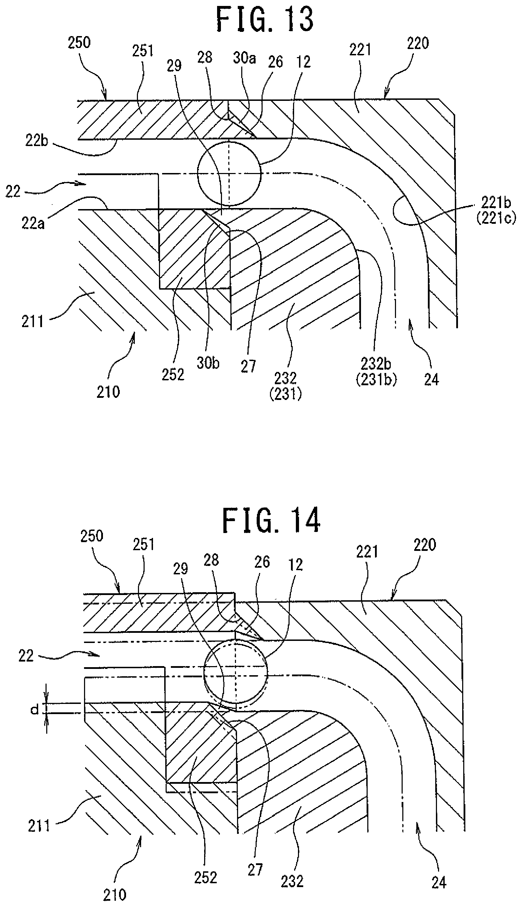

As shown in FIGS. 9 and 10, the linear guide device is provided with a guide rail 2, a slider 3, and a plurality of cylindrical rollers (rolling elements) 12. The guide rail 2 and the slider 3 have rolling surfaces 11, 21 which are arranged facing each other and which form rolling channels of the cylindrical rollers 12. The slider 3, further, has return channels 22 of the cylindrical rollers 12 and direction changing channels 24 which connect the return channels 22 and the rolling channels (see FIG. 12 and FIG. 13).

Further, the rolling channels, the return channels 22, and the direction changing channels 24 including the rolling surfaces 11 of the guide rail 2 and the rolling surfaces 21 of the slider 3 form the recirculation channels of the cylindrical rollers 12. By circulating the cylindrical rollers 12 inside the recirculation channels, one of the guide rail 2 and the slider 3 moves linearly relative to the other.

Further, the slider 3 is provided with a metal body 210, plastic end caps 220 which are fastened to the two ends of the body 210 in the direction of linear movement, plastic first and second return guides 231, 232 (see FIG. 12), plastic holders 235, and plastic return channel forming members 250. The holders 235, as shown in FIGS. 9 and 10, are members which support the end faces of the top and bottom cylindrical rollers 12 and which have projections 235a formed at the two end faces of substantially prismatic members extending in the direction of linear movement.

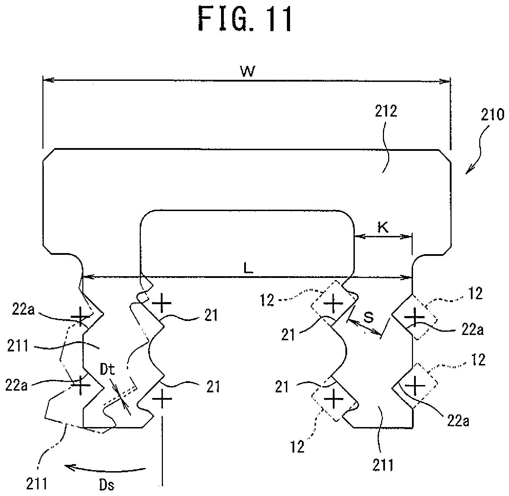

The body 210, as shown in FIG. 11, is comprised of leg parts 211 which are arranged at the two sides of the guide rail 2 in the width direction and a body part 212 which connects the two leg parts 211. At the insides of the leg parts 211, rolling surfaces 21 are formed. The two leg parts 211 of the body 210 have a dimension L between the two side faces which is smaller than the width W of the body part and, compared with usual leg parts 211, are shaped with parts cut off from the side surfaces of the body part 212 up to positions near the centers of the return channels 22. Further, the side faces of the two leg parts 211 are formed with inside guide surfaces 22a of the return channels 22.

Further, the elastic deformation amount Ds (shown in FIG. 11 by two-dot chain line image) of the left and right leg parts 211 at the time of assembly of the body 210 is about two times the elastic deformation amount Dt (shown in FIG. 11 by broken line image) of the contact parts of the cylindrical rollers 12 and rolling surfaces 21 (from results based on FEM analysis). Further, the dimension S of the thinnest parts of the leg parts 211 is 1/2 or more of the base end thickness (thickness at boundary with body part 220) K. Furthermore, the base end thickness K is about two times the diameter of the cylindrical rollers 12.

On the other hand, the two end faces of the two leg parts 211 of the body 210 in the direction of linear movement (long direction of guide rail), as shown in FIGS. 9 and 10, are formed with substantially rectangular solid-shaped recessed parts 211a in ranges including the inside guide surfaces 22a of the return channels 22 Between the top and bottom inside guide surfaces 22a of the two leg parts 211, female threads 211c are formed at two locations separated from each other in the direction of linear movement.

The return channel forming members 250 includes side members 251 which are arranged at the outsides of the two leg parts 211 of the body 210 in the width direction and end members 252 which fit into the recessed parts 211a of the two leg parts 211. The side members 251 are formed with top and bottom outside guide surfaces 22b which face the top and bottom inside guide surfaces 22a of the leg parts 211 to form the return channels 22. Between the top and bottom outside guide surfaces 22b of the side members 251, bolt insertion holes 251c which correspond to the female threads 211c are formed.

The return channel forming members 250 are fastened to the body 210 by arranging the side members 251 at the outsides of the two leg parts 211 in the width direction, fitting the two end members 252 into the recessed parts 211a of the two leg parts 211, and, in that state, inserting bolts 14 from the bolt insertion holes 251c and screwing the male threads at the front ends of the bolts 14 into the female threads 211c of the body 210.

The end members 252 are formed with holes 252a which form end parts of the return channels 22. The holes 252a of the end members 252 include parts which are connected from the outside guide surfaces 22b of the side members 251 and parts which are connected to the inside guide surfaces 22a of the leg parts 211. At the peripheral edge parts of the parts which are connected from the outside guide surfaces 22b of the holes 252a, projections 26 which have triangular cross-sections and which have outsides in the slider width direction which form inclined surfaces are formed, The peripheral edge parts of the parts which are connected to the inside guide surfaces 22a of the holes 252a are formed with cut surfaces 27 of inclined surface shapes,

The end caps 220, as shown in FIG. 12, are comprised of leg parts 221 which are arranged at the two sides of the guide rail 2 in the width direction and body parts 222 which extend in a direction perpendicularly intersecting the two leg parts 221 and connecting the two leg parts 221.

The surfaces of the two leg parts 221 at the body 210 sides are formed with first to third recessed parts 221a to 221c. The deepest parts of the third recessed parts 221c are deeper than the first and second recessed parts 221a, 221b. The surfaces of the leg parts 211 at the body 210 side are, further, formed with recessed parts 221d in which the projections 235a of the holders 235 fit between the first recessed parts 221a and the third recessed parts 221c at the inside parts in the width direction

Further, the center parts of the body parts 222 of the end caps 220 are formed with oil feed ports 222a. Furthermore, the surfaces of the end caps 220 at the body 210 sides are formed with oil feed grooves 223 which extend from the oil feed ports 222a to the recessed parts 221a, 221c.

In FIG. 12, the right side leg part 221 shows the state after the first and second return guides 231, 232 are attached, while the left side leg part 221 shows the state before the first and second return guides 231, 232 are attached,

As shown in FIGS. 12 and 11, the first to third recessed parts 221a to 221c of the end caps 220 and the first and second return guides 231, 232 form top and bottom direction changing channels 24 at the two leg parts 221 of the end caps 220. That is, the bottom surfaces of the first to third recessed parts 221a to 221c form the outside guide surfaces of the direction changing channels 24.

Further, the first return guide 231 has an inside guide surface 231b which faces the bottom surface of the third recessed part 221c (outside guide surface) and forms part of the bottom side direction changing channel 24. The second return guide 232 has an inside guide surface 232b which faces the bottom surface of the first, and second recessed parts 221a, 221b (outside guide surface) and forms part of the top side direction changing channel 24.

Furthermore, at the surfaces of the leg parts 221 and return guides 231, 232 of the end caps 220 at the body 210 sides, at the outsides of the end caps 220 in the width direction, cut surfaces 28 of inclined surface shapes which receive the inclined surfaces of the projections 26 of the return channel forming members 250 are formed. At the insides of the end caps 220 in the width direction, projections 29 which have triangular cross-sections and which have insides in the slider width direction which comprise inclined surfaces are formed. The cut surfaces 27 of the inclined surface shapes of the return channel forming members 250 receive the inclined surfaces of the projections 29.

FIG. 13 is a cross-sectional view which shows a boundary part of a direction changing channel 24 and a return channel 22 in a state fastening an end cap 220 to which a return guide 231/232 is attached to the body 210 to which a return channel forming member 250 is attached. In FIG. 13, the channel forming member 250 and the body 210 correspond to the cross-sectional view along A-A of FIG. 10 and the cross-sectional view along B-B, while the return guide 232/231 and end cap 220 correspond to the cross-sectional view along A-A or the cross-sectional view along B-B of FIG. 12.

As shown in FIG. 13, at the outside guide part which guides the cylindrical rollers 12 at the outsides of the return channel 22 and the direction changing channel 24 in the slider width direction (outside guide surface 22b of return channel 22 and recessed part 221b/221c of end cap 220), a projection 26 which has an inclined surface is formed at the boundary surfaces of the return channel forming member 250 (part which forms return channel 22) with the end cap 220 and return guide 231/232 (parts which form direction changing channel 24), while a cut surface 28 of an inclined surface shape which receives the projection 26 is formed at the end cap 220. Further, a clearance 30a is provided between the projection 26 and the cut surface 28.

At the inside guide part which guides the cylindrical rollers 12 at the insides of return channel 22 and direction changing channel 24 in the slider width direction (inside guide surface 22a of return channel 22 and inside guide surface 231b/232b of return guide 232), a projection 29 which has an inclined surface is formed at the boundary surfaces of the return guide 231/232 (part which forms direction changing channel) with the return channel forming member 250 (part which forms return channel 22), while a cut surface 27 of an inclined surface shape which receives the projection 29 is formed at the return channel forming member 250 (part which forms return channel 22). Further, a clearance 30b is provided between the projection 29 and the cut surface 27.

According to the linear guide device of this embodiment., as explained above, by the Ds which is shown in FIG. 11 becoming about two times Dt, when the precision of the mounting surface or the assembly surface cannot be sufficiently secured, the leg parts 211 can deform more than the contact parts of the cylindrical rollers 12 and the rolling surfaces 21 and absorb the error. Further, by the dimension S of the thinnest parts becoming 1/2 or more of the base end thickness K, extreme concentration of stress at the thinnest parts of the leg parts 211 is prevented and most of the load can be received by the leg parts 211 as a whole.

Therefore, according to the linear guide device of this embodiment, the deformation of the low rigidity leg parts 211 can be used to absorb mounting error. Even at the time of action of a large load, the load can be received without extreme concentration of stress at the thinnest parts of the leg parts 211, so sudden breakage or breakage due to repeated fatigue can be prevented.

Further, the thinner the leg parts 211 of the body 210 of the slider 3, the lower the rigidity of the leg parts 211 and the more advantageous in the point of the absorption of mounting error and other centering ability increasing, but the more disadvantageous in the point that stress at the time of application of a load increases and therefore the strength of the leg parts 211 falls.. If this drop in strength becomes remarkable, a high load capacity can no longer be realized regardless using rolling elements constituted by cylindrical rollers 12 to increase the load capacity at the rolling element parts That is, the increase in the load capacity of the linear guide device is restricted by the strength secured by the low rigidity leg parts 211.

As opposed to this, in the linear guide device of this embodiment, the base end thickness K of the leg parts 211 is about two times the diameter of the cylindrical rollers 12 so as to suppress the drop in strength of the body 210 and realize both a centering ability and high load capacity.

Therefore, according to the linear guide device of this embodiment, the device has absorption of mounting error or other centering ability and realizes high load capacity without being restricted by the load capacity for securing the strength of the low rigidity leg parts 211 Further, since the two leg parts 211 of the slider body 210 are flexible structure parts, the device can be manufactured more inexpensively compared with the case of providing a flexible structure part at the long guide rail 2.

Furthermore, according to the linear guide device of this embodiment, at the time of action of a high load, the leg parts 211 of the slider body 210 greatly deform from the state of FIG.. 13. When, as shown in FIG. 14, the amount of opening deformation of the leg parts 211 (amount of movement d) becomes a magnitude exceeding two times the amount of play of ordinary rolling elements (0.1 to 0.2 mm), the projection 26 which is formed at the return channel forming member 250 deforms by flexing and the projection 26 is received by the cut surface 28 which is formed at the end cap 220. Along with this, the projection 29 of the return guide 231/232 contacts the cut surface 27 of the return channel forming member 250 and the projection 29 deforms by flexing. In FIG. 14, the two-dot chain line shows the state of FIG. 13.

In this way, by having the end cap 220 and the return guide 231/232 (parts which form direction changing channel) track deformation of the leg parts of the slider body 211 which occurs at the time of action of a high load, it is possible to prevent step differences from being formed inside the direction changing channel 24. Due to this, the cylindrical rollers 12 smoothly move between the end cap 220 and return guide 231/232 and the return channel forming member 250, so deterioration of operability, generation of noise, and early breakage do not occur.

Further, due to the presence of the clearances 30b, 31a, it is possible tomake the projections 29, 26 elastically deform without causing an excessive load at the cut surfaces 27, 28, so the durability of the projections 29, 26 is improved compared with the case of no clearances 30b, 31a.

Therefore, according to the linear guide device of this embodiment, a centering ability and high load capacity are both realized and an excellent operability and durability are obtained.

### [Third Embodiment]

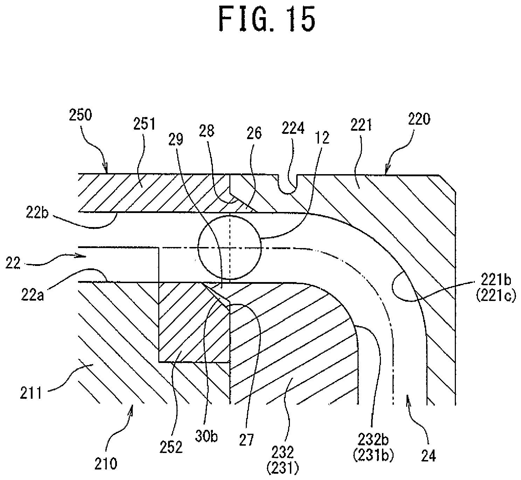

FIG. 15 will be used to explain a linear guide device of the third embodiment.

The linear guide device of this embodiment, as shown in FIG. 15, is formed with slits 224 at side surfaces of the leg parts 211 of the end caps 220. Further, the projections 26 of the channel forming members 250 and the cut surfaces 28 of the end caps 220 contact each other so there is no clearance between the two, The other points are the same as the linear guide device of the second embodiment.

Accordingly, at the time of action of a high load, the leg parts 211 of the slider body 210 greatly deform from the state of FIG. 15. When as shown in FIG. 14, the amount of opening deformation of the leg parts 211 (amount of movement d) becomes a magnitude exceeding two times the amount of play of usual rolling elements (0.1 to 0 2 mm), the projections 26 which are formed at the return channel forming members 250 deform by flexing.

The flexing deformation of the projections 26 is followed by the cut surfaces 28 of the end caps 220, and the end caps 220 elastically deform at the positions of the slits 224. Along with this, the projections 29 of the return guides 231, 232 contact the cut surfaces 27 of the return channel forming members 250 whereby the projections 29 deform by flexing.

Therefore, according to the linear guide device of this embodiment, advantageous effects similar to the linear guide device of the second embodiment are obtained and the plastic projections 26 are higher in durability compared with the linear guide device of the second embodiment.

### [Fourth Embodiment]

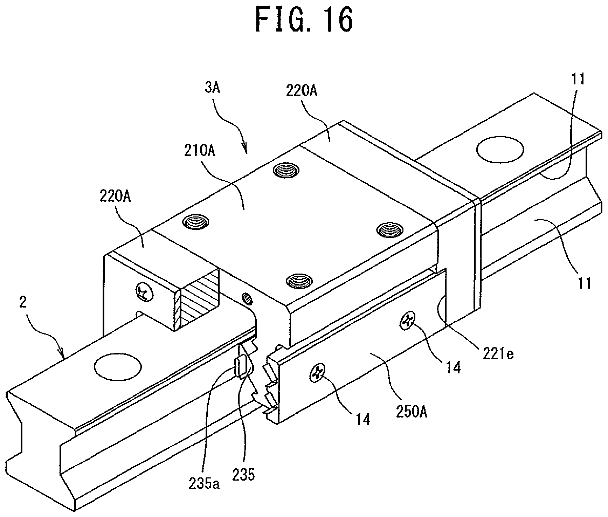

FIGS. 16 to 19 will be used to explain the linear guide device of the fourth embodiment.

The linear guide device of this embodiment is the same as the linear guide device of the second embodiment other than the configuration of the slider (in particular, the channel forming members).

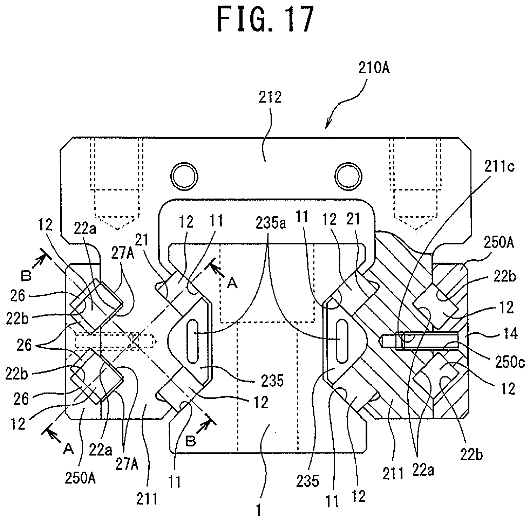

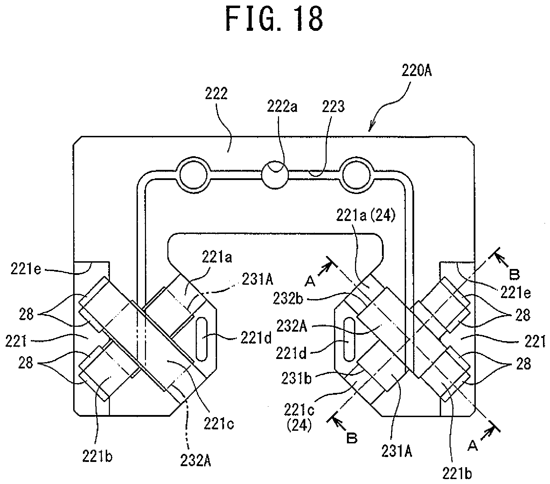

As shown in FIGS. 16 and 17, in the linear guide device of this embodiment, the slider 3A is provided with a metal body 210A, plastic end caps 220A which are fastened to the two ends of the body 210A in the linear direction, first and second return guides 231A, 232A (see FIG. 18), and plastic return channel forming members 250A.

The body 210A does not have recessed parts 211a at the end faces in the linear direction and has chamfered open ends at the inside guide surfaces 22a which form the return channels 22. Otherwise, it is the same as the body 210 of the second embodiment.

The return channel forming members 250A are members which are arranged at the outsides of the two leg parts 211 of the body 210A in the width direction and which are formed with top and bottom outside guide surfaces 22b which face the top and bottom inside guide surfaces 22a of the leg parts 211 to form return channels 22. Between the top and bottom outside guide surfaces 22b of the return channel forming members 250A, bolt insertion holes 250c which correspond to the female threads 211c are formed The peripheral edge parts of the outside guide surfaces 22b of the end faces 253 of the return channel forming members 250A are formed with projections 26 which have inclined surfaces.

The return channel forming members 250A are fastened to the body 210A by arranging them at the outsides of the two leg parts 211 in the width direction, inserting bolts from the bolt insertion holes 250c, and screwing the front ends of the bolts into the female threads 211C of the body 210.

As shown in FIG. 18, the end caps 220A of this embodiment are the same as the end caps 220 of the second embodiment except for the point of not having the projections 29 and the point of being formed with cut parts 221e in which the end parts of the return channel forming members 250A fit. Further, the first and second return guides 231A, 232A are the same as the return guides 231, 232 of the second embodiment except for the point of not having the projections 29.

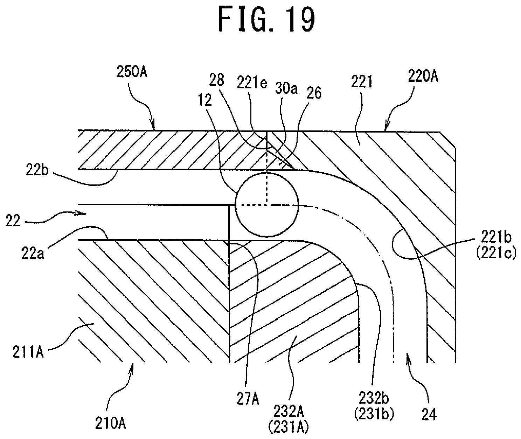

FIG. 19 is a cross-sectional view which shows a boundary part between a direction changing channel 24 and a return channel 24 in the state with an end cap 220A to which a return guide 231A/232A is attached fastened to the body 210A to which the channel forming member 250A is attached.. In FIG.. 19, the channel forming member 250A and body 210A correspond to the cross-sectional view along A-A and cross-sectional view along B-B of FIG. 17, while the return guides 232A, 231A and end caps 220A correspond to the cross-sectional view along A-A or the cross-sectional view along B-B of FIG. 18.

As shown in FIG. 19, at the outside guide part which guides the cylindrical rollers 12 at the outsides of the return channel 22 and direction changing channel 24 in the slider width direction (outside guide surface 22b of return channel 22 and recessed part 221b/221c of end cap 220A), a projection 26 which has an inclined surface is formed at the boundary surfaces of the return channel forming member 250A (part which forms return channel 22) with the end cap 220A (part which forms direction changing channel 24), while a cut surface 28 of an inclined surface shape which receives the projection 26 is formed at the end cap 220A. Further, a clearance 30a is provided between the projection 26 and the cut surface 28.

Further, at the inside guide part which guides the cylindrical rollers 12 at the insides of the return channel 22 and direction changing channel 24 in the slider width direction (inside guide surface 22a of return channel 22 and inside guide surface 231b/232b of return guide 232A), there is a chamfered part 27A of the inside guide surface 22a which is formed at the body 210A between the body 210A and the return guide 231A/232A. The chamfered part 27A of the body 210A is positioned separated from the front end position of the projection 250A of the channel forming member 250A by at least a dimension which corresponds to the diameter of the cylindrical roller 12.

Accordingly, at the time of action of a high load, the leg parts 211A of the slider body 210A greatly deform from the state of FIG. 19. When, in the same way as FIG. 14, the amount of opening deformation (amount of movement d) of the leg parts 211A becomes a magnitude exceeding two times the amount of play (0.1 to 0.2 mm) of ordinary rolling elements, at the outside guide parts, in the same way as the second embodiment, the projections 26 which are formed at the return channel forming members 250A deform by flexing and the projections 26 are received by the cut surfaces 28 which are formed at the end caps 220A. At the inside guide parts, the inclined surfaces of the chamfered parts 27A connect the return guides 231A, 232A and the leg parts 211A of the body 210A.

In this way, the end caps 220A and the return guides 231A, 232A (parts which form the direction changing channels) can follow deformation of the leg parts 211 of the slider body which occur at the time of action of a high load and thereby prevent formation of step differences inside the direction changing channels 24. Due to this, cylindrical rollers 12 smoothly move between the end caps 220 and return guides 231, 232 and the return channel forming members 250A, so there is no deterioration of the operability, generation of noise, and early breakage.

In the linear guide device of this embodiment, a return channel forming member 250A which is simpler in structure than even the return channel forming member 250 of the second embodiment is used and there is no need to form recessed parts 212d at the end faces of the metal body 210A. Accordingly, the linear guide device of this embodiment gives advantageous effects which are similar to the linear guide device of the second embodiment and can be manufactured more inexpensively than the linear guide device of the second embodiment.

### Industrial Applicability

As explained above, according to the present invention, art which is different from the art of Patent Document 1 which makes the guide rail a flexible structure part can be used to provide a linear guide device which can be inexpensively configured while achieving both a centering ability (absorption of mounting error) and high load capacity. Reference Signs List

1 linear guide device
2 guide rail
3 slider
4 slider body
4s leg part
5 end cap
6 side seal
7 recirculation channel cover
8 rolling element return channel
9 loaded rolling channel
10 endless recirculation channel
12 roller, cylindrical roller (rolling element)
13 rolling element guide deflector
14 recirculation channel cover fastening screw
15, 16 holder
22 return channel
22a inside guide surface of return channel
22b outside guide surface of return channel
24 direction changing channel
210 body
210A body
211 leg part of body
211a recessed part
211c female thread
212 body part
220 end cap
220A end cap
221 leg part of end cap
222 body part of end cap
221a to 221c first to third recessed parts
221e cut part
222a oil feed port
223 oil feed groove
231b, 232b inside guide surface
231 first return guide
231A first return guide
232 second return guide
232A second return guide
250 return channel forming member
250A return channel forming member
251 side member
251c bolt insertion hole
252 end member
252a hole forming end part of return channel
26 projection having inclined surface
27 inclined cut surface
27A chamfered part
28 inclined cut surface
29 projection having inclined surface

## Claims

1. A linear guide device comprising:
a guide rail (2) having a first rolling groove (2a) and a second rolling groove (2a) at its left and right outside surfaces respectively; and
a slider (3) which has a first rolling groove (4a) and a second rolling groove (4a) which face the first rolling groove (2a) and the second rolling groove (2a) of the guide rail (2) at inside surfaces of its left and right leg parts (4s) respectively, and which straddles the guide rail (2) in a slidable manner through rollers (12) loaded in first and second loaded rolling channels (9) configured with the first and second rolling grooves (2a) of the guide rail (2) and the first and second rolling grooves (4a) of the slider (3), wherein
the slider (3) has a slider body (4);
first and second rolling element return channels (8, 22) for endless recirculation of the rollers (12) have outside surfaces of the left and right leg parts (4s) of the slider body (4), and the outside surfaces of the left and right leg parts (4s) are respectively depressed inwardly,
a load side pitch Pf and a return side pitch Pm of the rollers (12) are unequal and positions of the rollers (12) at load and return sides are symmetric in an up-down direction, the load side pitch Pf being defined as a pitch between the roller (12) interposed between the first rolling groove (2a) of the guide rail (2) and the first rolling groove (4a) of the slider (3) and the roller (12) interposed between the second rolling groove (2a) of the guide rail (2) and the second rolling groove (4a) of the slider (3), the return side pitch Pm being defined as a pitch between the roller (12) disposed in the first rolling element return channel (8, 22) and the roller (12) disposed in the second rolling element return channel (8), **characterised in that**
the slider (3) has a pair of end caps (5, 220) provided at two sides in a sliding direction of the slider body (4);
the pair of end caps (5, 220) have U-shaped direction changing channels (24), both ends of the direction changing channels (24) are communicated with the first and second rolling element return channels (8, 22) and the first and second loaded rolling channels (9),
endless recirculation channels (10) are configured with the first and second rolling element return channels (8), the first and second loaded rolling channels (9), and direction changing channels (24),
at outside guide parts which guide the rollers (12) at an outer side in a width direction of the slider (3) of the first and second rolling element return channels (8, 22) and the direction changing channels (24), projections (26) having inclined surfaces are formed at boundary surfaces with the pair of end caps (5, 220) of return channel forming members (250) included in the first and second rolling element return channels (8, 22) and with return guides (231, 232) included in the direction changing channels (24),
cut surfaces (28) having inclined surfaces which receive the projections (26) are respectively formed at the pair of end caps (5, 220),
clearances (30a) are respectively provided between the projections (26) and the cut surfaces (28), and
the slider (3) has a rigidity at the left and right leg parts (4s) smaller than a rigidity of contact parts of the rollers (12) and the first and second rolling grooves (2a, 2b, 4a, 4b).

2. The linear guide device as set forth in claim 1, wherein the load side pitch Pf and the return side pitch Pm of the rollers (12) are unequal so that the pitch Pf > the pitch Pm.

3. The linear guide device as set forth in claim 1 or 2, wherein a position of the roller (12) loaded in the loaded rolling channel (9) between the first rolling groove (2a) of the guide rail (2) and the first rolling groove (4a) of the slider (3), and a position of the roller (12) loaded in the loaded rolling channels (9) between the second rolling groove (2a) of the guide rail (2) are symmetric in the up-down direction, and a position of the roller (12) disposed in the first rolling element return channel (8, 22) and a position of the roller (12) disposed in the second rolling element return channel (8, 22) are symmetric in the up-down direction.

4. The linear guide device as set forth in any one of claims 1 to 3, wherein the first and the second rolling grooves (2a) of the slider (2) are provided so that surfaces at which the first rolling groove (4a) and the rollers (12) contact each other are inclined in advance in directions opposite to directions of inclination of the first rolling groove (4a) which occurs when the left and right leg parts (4s) receive load and deform open, and crowning is provided with the two end parts in the up-down cross-sectional direction of the first and second rolling grooves (4a) of the slider (3) and the first and second rolling grooves (2a) of the guide rail (2).

5. The linear guide device as set forth in claim 1, wherein
at inside guide parts which guide the rollers (12) at an inner side in the width direction of the slider (3) of the first and second rolling element return channels (8, 22) and the direction changing channels (24), projections (29) having inclined surfaces are formed at boundary surfaces with return channel forming members (250) included in the first and second rolling element return channels (8, 22) of the return guides (231, 232),
cut surfaces (27) having inclined surfaces which receive the projections (29) are respectively formed at the return channel forming member (250), and
clearances (30b) are respectively provided between the projections (29) and the cut surfaces (27).

## Patentansprüche

1. Linearführungsvorrichtung, umfassend:
eine Führungsschiene (2), die eine erste Wälznut (2a) und eine zweite Wälznut (2a) an ihren linken beziehungsweise rechten Außenflächen aufweist; und
ein Gleitstück (3), das eine erste Wälznut (4a) und eine zweite Wälznut (4a) aufweist, die der ersten Wälznut (2a) und der zweiten Wälznut (2a) der Führungsschiene (2) an Innenflächen seines linken beziehungsweise rechten Schenkelteils (4s) zugewandt sind, und welches die Führungsschiene (2) durch Rollen (12) gleitend überspannt, die in erste und zweite geladene Wälzkanäle (9) geladen sind, die mit den ersten und zweiten Wälznuten (2a) der Führungsschiene (2) und der ersten und zweiten Wälznuten (4a) des Gleitstücks (3) konfiguriert sind, wobei
das Gleitstück (3) einen Gleitstückkörper (4) aufweist;
erste und zweite Wälzkörperrückführkanäle (8, 22) zur endlosen Rückführung der Rollen (12) Außenflächen der linken und rechten Schenkelteile (4s) des Gleitstückkörpers (4) aufweisen, und die Außenflächen der linken und rechten Schenkelteile (4s) jeweils nach innen gedrückt sind,
ein Lastseitenabstand Pf und ein Rückführseitenabstand Pm der Rollen (12) ungleich und Positionen der Rollen (12) auf der Last- und der Rückführseite symmetrisch in einer Oben/-Unten-Richtung sind, wobei der Lastseitenabstand Pf als ein Abstand zwischen der Rolle (12), die zwischen der ersten Wälznut (2a) der Führungsschiene (2) und der ersten Wälznut (4a) des Gleitstücks (3) angeordnet ist, und der Rolle (12), die zwischen der zweiten Wälznut (2a) der Führungsschiene (2) und der zweiten Wälznut (4a) des Gleitstücks (3) angeordnet ist, definiert ist, und der Rückführseitenabstand Pm als Abstand zwischen der im ersten Wälzelementrückführkanal (8, 22) angeordneten Rolle (12) und der im zweiten Wälzelement-Rückführkanal (8) angeordneten Rolle (12) definiert ist, **dadurch gekennzeichnet, dass**
das Gleitstück (3) ein Paar Endkappen (5, 220) aufweist, die an zwei Seiten in einer Gleitrichtung des Gleitstückkörpers (4) vorgesehen sind;
das Paar von Endkappen (5, 220) U-förmige Richtungsänderungskanäle (24) aufweist, wobei beide Enden der Richtungsänderungskanäle (24) mit den ersten und zweiten Rollelement-Rückführkanälen (8, 22) und dem ersten und zweiten geladenen Wälzkanälen (9) verbunden sind,
endlose Rückführkanäle (10) mit den ersten und zweiten WälzelementRückführkanälen (8), den ersten und zweiten geladenen Wälzkanälen (9) und Richtungsänderungskanälen (24) konfiguriert sind,
an äußeren Führungsteilen, welche die Rollen (12) an einer Außenseite in Breitenrichtung des Gleitstücks (3) der ersten und zweiten Wälzkörperrückführkanäle (8, 22) und der Richtungsänderungskanäle (24) führen, Vorsprünge (26) mit geneigten Oberflächen an Grenzflächen mit dem Paar von Endkappen (5, 220) von Rückführkanalbildungselementen (250), die in den ersten und zweiten Wälzelementrückführkanälen (8, 22) enthalten sind, und mit Rückführführungen (231, 232), die in den Richtungsänderungskanälen (24) enthalten sind, ausgebildet sind
Schnittflächen (28) mit geneigten Flächen, welche die Vorsprünge (26) aufnehmen, jeweils an dem Paar Endkappen (5, 220) ausgebildet sind,
Zwischenräume (30a) jeweils zwischen den Vorsprüngen (26) und den Schnittflächen (28) vorgesehen sind,
das Gleitstück (3) eine Festigkeit an den linken und rechten Schenkelteilen (4s) aufweist, die kleiner ist als eine Festigkeit der Kontaktteile der Rollen (12) und der ersten und zweiten Wälznuten (2a, 2b, 4a, 4b).

2. Linearführungsvorrichtung nach Anspruch 1, wobei der Lastseitenabstand Pf und der Rückführseitenabstand Pm der Rollen (12) ungleich sind, so dass der Abstand Pf > der Abstand Pm ist.

3. Linearführungsvorrichtung nach Anspruch 1 oder 2, wobei eine Position der Rolle (12), die in den geladenen Wälzkanal (9) zwischen der ersten Wälznut (2a) der Führungsschiene (2) und der ersten Wälznut (4a) des Gleitstücks (3) geladen ist, und eine Position der Rolle (12), in welche die geladenen Wälzkanäle (9) zwischen der zweiten Wälznut (2a) der Führungsschiene (2) eingelegt sind, symmetrisch sind in Oben/-Unten-Richtung und einer Position der Rolle (12), die in dem ersten Wälzelement-Rückführkanal (8, 22) angeordnet ist, und einer Position der Rolle (12), die in dem zweiten Wälzelement-Rückführkanal (8, 22) angeordnet ist, symmetrisch in der Oben/-Unten-Richtung ist.

4. Linearführungsvorrichtung nach einem der Ansprüche 1 bis 3, wobei die erste und die zweite Wälznut (2a) des Gleitstücks (2) so vorgesehen sind, dass Oberflächen, an welchen die erste Wälznut (4a) und die Rollen (12) einander berühren, im Voraus in Richtungen geneigt sind, die den Neigungsrichtungen der ersten Wälznut (4a) entgegengesetzt sind, die auftreten, wenn die linken und rechten Schenkelteile (4s) eine Last aufnehmen und sich offen verformen, und eine Balligkeit bei den beiden Endteilen in der Oben/-Unten-Querschnittsrichtung der ersten und der zweiten Wälznut (4a) des Gleitstücks (3) und der ersten und der zweiten Wälznut (2a) der Führungsschiene (2) bereitgestellt wird.

5. Linearführungsvorrichtung nach Anspruche 1, wobei
an inneren Führungsteilen, welche die Rollen (12) an einer Innenseite in Breitenrichtung des Gleitstücks (3) des ersten und des zweiten Wälzkörperrückführkanals (8, 22) und der Richtungsänderungskanäle (24) führen, Vorsprünge (29) mit geneigten Flächen an Grenzflächen mit Rückführkanalbildungselementen (250) ausgebildet sind, die in den ersten und zweiten Wälzkörperrückführkanälen (8, 22) der Rückführführungen (231, 232) enthalten sind,
Schnittflächen (27) mit geneigten Flächen, welche die Vorsprünge (29) aufnehmen, jeweils an dem Rückführkanalbildungselement (250) ausgebildet sind, und
Freiräume (30b) jeweils zwischen den Vorsprüngen (29) und den Schnittflächen (27) vorgesehen sind.

## Revendications

1. Dispositif de guide linéaire comprenant :
un rail de guidage (2) ayant une première rainure de roulement (2a) et une seconde rainure de roulement (2a) au niveau de ses surfaces extérieures gauche et droite respectivement ; et
un curseur (3) qui a une première rainure de roulement (4a) et une seconde rainure de roulement (4a) qui font face à la première rainure de roulement (2a) et à la seconde rainure de roulement (2a) du rail de guidage (2) au niveau de surfaces intérieures de ses parties pattes gauche et droite (4s) respectivement, et qui enjambe le rail de guidage (2) d'une manière coulissante par l'intermédiaire de rouleaux (12) chargés dans des premier et second canaux de roulement chargés (9) configurés avec les première et seconde rainures de roulement (2a) du rail de guidage (2) et les première et seconde rainures de roulement (4a) du curseur (3), dans lequel le curseur (3) a un corps de curseur (4) ;
des premier et second canaux de retour d'élément roulant (8, 22) pour recirculation sans fin des rouleaux (12) ont des surfaces extérieures des parties pattes gauche et droite (4s) du corps de curseur (4), et les surfaces extérieures des parties pattes gauche et droite (4s) sont respectivement enfoncées vers l'intérieur,
un pas côté charge Pf et un pas côté retour Pm des rouleaux (12) sont inégaux et des positions des rouleaux (12) au niveau des côtés charge et retour sont symétriques dans une direction haut-bas, le pas côté charge Pf étant défini comme pas entre le rouleau (12) interposé entre la première rainure de roulement (2a) du rail de guidage (2) et la première rainure de roulement (4a) du curseur (3) et le rouleau (12) interposé entre la seconde rainure de roulement (2a) du rail de guidage (2) et la seconde rainure de roulement (4a) du curseur (3), le pas côté retour Pm étant défini comme pas entre le rouleau (12) disposé dans le premier canal de retour d'élément roulant (8, 22) et le rouleau (12) disposé dans le second canal de retour d'élément roulant (8), **caractérisé en ce que** le curseur (3) comporte une paire de chapeaux d'extrémité (5, 220) situés au niveau de deux côtés dans une direction de coulissement du corps de curseur (4) ;
la paire de chapeaux d'extrémité (5, 220) a des canaux (24) en forme de U à changement de direction, les deux extrémités des canaux à changement de direction (24) communiquent avec les premier et second canaux de retour d'élément roulant (8, 22) et les premier et second canaux de roulement chargés (9),
des canaux de recirculation sans fin (10) sont configurés avec les premier et second canaux de retour d'élément roulant (8), les premier et second canaux de roulement chargés (9) et les canaux à changement de direction (24),
au niveau de parties de guidage extérieures qui guident les rouleaux (12) au niveau d'un côté extérieur dans une direction de largeur du curseur (3) des premier et second canaux de retour d'élément roulant (8, 22) et des canaux à changement de direction (24), des saillies (26) ayant des surfaces inclinées sont formées au niveau de surfaces de limite avec la paire de chapeaux d'extrémité (5, 220) d'éléments formant canal de retour (250) inclus dans les premier et second canaux de retour d'élément roulant (8, 22) et avec des guides de retour (231, 232) inclus dans les canaux à changement de direction (24),
des surfaces coupées (28) ayant des surfaces inclinées qui reçoivent les saillies (26) sont respectivement formées au niveau de la paire de chapeaux d'extrémité (5, 220), des dégagements (30a) sont respectivement prévus entre les saillies (26) et les surfaces coupées (28), et
le curseur (3) a une rigidité au niveau des parties pattes gauche et droite (4s) inférieure à une rigidité de parties de contact des rouleaux (12) et des première et seconde rainures de roulement (2a, 2b, 4a, 4b).

2. Dispositif de guide linéaire selon la revendication 1, dans lequel le pas côté charge Pf et le pas côté retour Pm des rouleaux (12) sont inégaux de telle sorte que le pas Pf > le pas Pm.

3. Dispositif de guide linéaire selon la revendication 1 ou 2, dans lequel une position du rouleau (12) chargé dans le canal de roulement chargé (9) entre la première rainure de roulement (2a) du rail de guidage (2) et la première rainure de roulement (4a) du curseur (3), et une position du rouleau (12) chargé dans les canaux de roulement chargés (9) entre la seconde rainure de roulement (2a) du rail de guidage (2) sont asymétriques dans la direction haut-bas, et une position du rouleau (12) disposé dans le premier canal de retour d'élément roulant (8, 22) et une position du rouleau (12) disposé dans le second canal de retour d'élément roulant (8, 22) sont symétriques dans la direction haut-bas.

4. Dispositif de guide linéaire selon l'une quelconque des revendications 1 à 3, dans lequel les première et seconde rainures de roulement (2a) du curseur (3) sont fournies de telle sorte que des surfaces au niveau desquelles la première rainure de roulement (4a) et les rouleaux (12) sont en contact entre eux sont inclinées à l'avance dans des directions opposées à des directions d'inclinaison de la première rainure de roulement (4a) qui se produit quand les parties pattes gauche et droite (4s) reçoivent une charge et se déforment en s'ouvrant, et un bombage est pourvu des deux parties d'extrémité dans la direction en coupe transversale haut-bas des première et seconde rainures de roulement (4a) du curseur (3) et des première et seconde rainures de roulement (2a) du rail de guidage (2).

5. Dispositif de guide linéaire selon la revendication 1, dans lequel
au niveau de parties de guidage intérieures qui guident les rouleaux (12) au niveau d'un côté intérieur dans la direction de largeur du curseur (3) des premier et second canaux de retour d'élément roulant (8, 22) et des canaux à changement de direction (24), des saillies (29) ayant des surfaces inclinées sont formés au niveau de surfaces de limite avec des éléments formant canal de retour (250) inclus dans les premier et deuxième canaux de retour d'élément roulant (8, 22) des guides de retour (231, 232),
des surfaces coupées (27) ayant des surfaces inclinées qui reçoivent les saillies (29) sont respectivement formées au niveau de l'élément formant canal de retour (250), et des dégagements (30b) sont respectivement prévus entre les saillies (29) et les surfaces coupées (27).
